(19) Europäisches Patentamt
European Patent Office
Office européen des brevets

(11) **EP 1 902 908 B1**

(12) **EUROPÄISCHE PATENTSCHRIFT**

(45) Veröffentlichungstag und Bekanntmachung des Hinweises auf die Patenterteilung:
**16.03.2011 Patentblatt 2011/11**

(51) Int Cl.:
***B60R 21/0132*** *(2006.01)*

(21) Anmeldenummer: **07017370.3**

(22) Anmeldetag: **05.09.2007**

(54) **Kollisions- und/oder Personenschutzsystem für ein Kraftfahrzeug**

Collision and/or passenger protection system for a motor vehicle

Système de protection de personnes et/ou contre les collisions pour un véhicule automobile

(84) Benannte Vertragsstaaten:
**DE FR GB IT**

(30) Priorität: **20.09.2006 DE 102006044085**

(43) Veröffentlichungstag der Anmeldung:
**26.03.2008 Patentblatt 2008/13**

(73) Patentinhaber:
• **AUDI AG**
**85045 Ingolstadt (DE)**
• **Volkswagen AG**
**38436 Wolfsburg (DE)**
• **Andata Entwicklungstechnologie GmbH & Co. KG**
**5400 Hallein (AT)**

(72) Erfinder:
• **Keck, Frank, Dr.**
**85051 Ingolstadt (DE)**

• **Weiss, Christian**
**85113 Böhmfeld (DE)**
• **Botsch, Michael**
**85057 Ingolstadt (DE)**
• **Neubohn, André**
**38440 Wolfsburg (DE)**
• **Kuhn, Andreas**
**5440 Kuchl-Golling (AT)**
• **Palau, Antoni**
**5020 Salzburg (AT)**

(74) Vertreter: **Thielmann, Frank**
**AUDI AG,**
**Patentabteilung**
**85045 Ingolstadt (DE)**

(56) Entgegenhaltungen:
WO-A1-2004/020253     WO-A1-2005/037611
WO-A1-2005/097552     WO-A2-2005/035320
US-A1- 2006 129 295

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Kollisions- und/oder Personenschutzsystem für ein Kraftfahrzeug, insbesondere ein Insassenschutzsystem und/oder ein Fußgängerschutzsystem für ein Kraftfahrzeug, mit zumindest einem Kollisionssensor zum Messen einer zur Kollisionserkennung geeigneten Größe, wie z.B. einer Bewegungsgröße des Kraftfahrzeuges, wobei das Kollisions- und/oder Personenschutzsystem einen mittels eines Zündsignals steuerbaren Personenschutzaktor und ein Steuergerät zur Ermittlung des Zündsignals in Abhängigkeit eines aus der mittels des Kollisionssensors gemessenen Größe gebildeten Merkmalssignals umfasst.

Ein derartiges Personenschutzsystem offenbart z.B. die WO 2005/037611 A1, die ein aktives Insassenschutzsystem für ein Kraftfahrzeug mit zumindest einem Kollisionssensor zum Messen einer Bewegungsgröße des Kraftfahrzeuges offenbart, wobei das aktive Insassenschutzsystem einen mittels eines Zündsignals steuerbaren Insassenschutzaktor und ein Steuergerät zur Ermittlung bzw. Erzeugung des Zündsignals in Abhängigkeit eines zeitlichen Mittelwertes der mittels des Kollisionssensors gemessenen Bewegungsgröße über zumindest ein erstes Zeitintervall und vorteilhafterweise eines zeitlichen Mittelwertes der mittels des Kollisionssensors gemessenen Bewegungsgröße über ein zweites, von dem ersten Zeitintervall verschiedenes, Zeitintervall umfasst. Der zeitliche Mittelwert ist dabei ein Ausführungsbeispiel für ein Merkmalssignal.

Weitere Personenschutzsysteme offenbaren z.B. die WO 2005/037609 A1, die WO 2005/035320 A2, die WO 2005/035319 A1, die WO 2005/037610 A1, die DE 10 2004 032732, die DE 10 2004 031010, die DE 10 2004 025566, die DE 10 2004 027 693 A1, die DE 10 2004 026 638 A1, die DE 102 43 514 A1, die DE 101 32 681 C1, die DE 101 17 219 A1, die DE 100 65 518 B4, die DE 100 59 426 A1, die DE 100 42 376 C1, und die DE 199 09 538 A1.

Es ist Aufgabe der Erfindung, ein verbessertes Kollisions- und/oder Personenschutzsystem für ein Kraftfahrzeug anzugeben. Dabei ist es besonders wünschenswert, eine besonders präzise Auslösung eines solchen Kollisions- und/oder Personenschutzsystems für ein Kraftfahrzeug anzugeben.

Vorgenannte Aufgabe wird durch ein Kollisions- und/oder Personenschutzsystem für ein Kraftfahrzeug, insbesondere Insassenschutzsystem und/oder Fußgängerschutzsystem für ein Kraftfahrzeug, mit zumindest einem Kollisionssensor zum Messen einer zur Kollisionserkennung geeigneten Größe, wie z.B. einer Bewegungsgröße des Kraftfahrzeuges, gelöst, wobei das Kollisions- und/oder Personenschutzsystem einen mittels eines Zündsignals steuerbaren Personenschutzaktor oder eine mittels des Zündsignals steuerbare Warnvorrichtung und ein Steuergerät zur Ermittlung des Zündsignals in Abhängigkeit eines aus der mittels des Kollisionssensors gemessenen Größe gebildeten Merkmalssignals umfasst, und wobei das Kollisions- und/oder Personenschutzsystem einen automatisch ausgewählten Merkmalsgenerator zur Bildung des Merkmalssignals in Abhängigkeit der mittels des Kollisionssensors gemessenen Größe umfasst. Ein Kollisionssensor kann im Sinne der Erfindung ein der Fahrzeugsicherheit dienender Sensor sein. Ein Kollisionssensor kann im Sinne der Erfindung ein Crashsensor sein. Ein Kollisionssensor bzw. Crashsensor kann im Sinne der Erfindung z.B. ein Sensor für ein Insassenschutzsystem (z.B. Airbag, Gurtstraffer), ein Sensor für ein Fußgängerschutzsystem, wie z.B. Beschleunigungssensor, Drucksensor und/oder Lichtwellenleiter, oder ein Sensor für ein Precrashsystem (Radar, Kamera) sein. Ein Kollisions- und/oder Personenschutzsystem für ein Kraftfahrzeug kann im Sinne der Erfindung z.B. ein Insassenschutzsystem, ein Fußgängerschutzsystem, Fahrassistenzsystem ein Warnsystem und/oder ein Komfortsystem sein. Ein Zündsignal kann auch als Auslösesignal bezeichnet werden.

Der Merkmalsgenerator kann in dem Steuergerät implementiert sein. Ein Merkmalssignal im Sinne der Erfindung ist ein Signal, das durch Umwandlung (mittels des Merkmalsgenerators) eines von dem Kollisionssensor gelieferten Signals erzeugt wird. Eine derartige Umwandlung kann z.B. Integration (ein- oder mehrfach), Differentiation (ein- oder mehrfach), Fensterintegralbildung, Filterung, Fouriertransformation, Wavelettransformation, Maximum /Minimumanalyse, Differenzenbildung (der Signale unterschiedlicher Kollisionssensoren), Absolutwertbildung und/oder Bestimmung der Steigung gefilterter Größen umfassen. Zur Erweiterung möglicher Merkmalsgeneratoren können auch Zufallselemente bei deren Generierung eingesetzt werden (z. B. variable Schwankung von Fensterintegralbreiten, Filterkoeffizienten, etc.).

Eine Bewegungsgröße des Kraftfahrzeuges im Sinne der Erfindung kann eine Beschleunigung, eine Geschwindigkeit oder ein Weg bzw. eine von diesen Größen abgeleitete Größe sein. Die Bewegungsgröße ist dabei vorteilhafterweise eine Beschleunigung.

Ein Zündsignal im Sinne der Erfindung kann ein binäres Signal sein, das angibt, ob ein Personenschutzaktor, wie ein Airbag und/oder ein Gurtstraffer, ausgelöst werden soll. Ein solches Zündsignal im Sinne der Erfindung kann ein in der DE 100 35 505 A1 beschriebenes "FIRE/NO-FIRE"-Signal sein. Ein Zündsignal im Sinne der Erfindung kann auch ein komplexeres Signal sein, das angibt, in welchem Ausmaß (z.B. Stufe 1 oder Stufe 2) ein Airbag gezündet werden soll. Ein solches Zündsignal im Sinne der Erfindung kann zudem ein in der DE 100 35 505 A1 beschriebener Crashschwereparameter bzw. eine Insassenbeschleunigung bzw. -belastung sein. Ein Zündsignal im Sinne der Erfindung kann ein "softes" Signal sein.

Vorgenannte Aufgabe wird - insbesondere in Verbindung mit vorgenannten Merkmalen - zudem durch ein Verfahren zum Herstellen eines Kollisions- und/oder Personenschutzsystems für ein Kraftfahrzeug mit zumindest einem Kollisionssensor zum Messen einer zur Kollisionserkennung geeigneten Größe, wie einer Bewegungsgröße des Kraftfahrzeuges, gelöst, wobei das aktive Kollisions- und/oder Personenschutzsystem einen mittels eines Zündsignals steuerbaren Personenschutzaktor und ein Steuergerät zur Ermittlung des Zündsignals in Abhängigkeit eines aus der mittels des Kollisionssensors gemessenen Größe gebildeten Merkmalssignals umfasst, und wobei ein zur Implementierung in dem Kollisions- und/oder Personenschutzsystem vorgesehener Merkmalsgenerator zur Bildung des Merkmalssignals automatisch ausgewählt wird.

In vorteilhafter Ausgestaltung der Erfindung wird der zur Implementierung in dem Kollisions- und/oder Personenschutzsystem vorgesehene Merkmalsgenerator zur Bildung des Merkmalssignals automatisch aus einer Menge von Merkmalsgeneratoren zur Bildung je zumindest eines Merkmalssignals ausgewählt.

In weiterhin vorteilhafter Ausgestaltung der Erfindung erfolgt die Auswahl des Merkmalsgenerators in Abhängigkeit einer Kostenfunktion. Dabei erfolgt die Bildung der Kostenfunktion in weiterhin vorteilhafter Ausgestaltung der Erfindung in Abhängigkeit eines Zündsignals, das in Abhängigkeit des Merkmalssignals gebildet wird, wobei die Kostenfunktion vorteilhafterweise zudem in Abhängigkeit eines gewünschten Zündsignals gebildet wird.

In weiterhin vorteilhafter Ausgestaltung der Erfindung erfolgt die Bildung der Kostenfunktion in Abhängigkeit der Differenz eines gewünschten Zündsignals und eines Zündsignals, das in Abhängigkeit des Merkmalssignals gebildet wird. Dabei wird die Differenz vorteilhafterweise zeitabhängig gewichtet.

In weiterhin vorteilhafter Ausgestaltung der Erfindung wird für jeden Merkmalsgenerator aus der Menge der Merkmalsgeneratoren zumindest je ein Merkmalssignal erzeugt, wobei vorteilhafterweise ein Zündsignal aus den Merkmalssignalen gebildet wird, und wobei in weiterhin vorteilhafter Ausgestaltung der Erfindung in Abhängigkeit des Zündsignals eine Kostenfunktion gebildet wird. Dabei wird die Kostenfunktion in weiterhin vorteilhafter Ausgestaltung der Erfindung in Abhängigkeit einer Differenz zwischen einem gewünschten Zündsignal und einem von den Merkmalssignalen abhängigen Zündsignal gebildet, wobei die Differenz vorteilhafterweise zeitabhängig gewichtet wird.

In weiterhin vorteilhafter Ausgestaltung der Erfindung wird der automatisch ausgewählte Merkmalsgenerator in dem Kollisions- und/oder Personenschutzsystem implementiert.

Zum Herstellen eines Kraftfahrzeuges mit einem vorgenannten Kollisions- und/oder Personenschutzsystem wird ein vorgenannter ausgewählter Merkmalsgenerator in dem Kraftfahrzeug implementiert, wobei in weiterhin vorteilhafter Ausgestaltung der Erfindung ein Kollisionssensor zum Messen einer zur Kollisionserkennung geeigneten Größe, wie z.B. einer Bewegungsgröße des Kraftfahrzeuges, in dem Kraftfahrzeug implementiert und derart datentechnisch mit dem Merkmalsgenerator verbunden wird, dass mittels des Merkmalsgenerators ein Merkmalssignal in Abhängigkeit der mittels des Kollisionssensors gemessenen Größe erzeugbar ist.

In weiterhin vorteilhafter Ausgestaltung der Erfindung wird ein mittels eines in Abhängigkeit des Merkmalssignals erzeugbaren Zündsignals steuerbarer Personenschutzaktor in dem Kraftfahrzeug implementiert.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:

Fig. 1      eine Draufsicht auf ein Kraftfahrzeug,

Fig. 2      ein Ausführungsbeispiel eines Insassenschutzsystems als Ausführungsbeispiel für ein Kollisions- und/oder Personenschutzsystem,

Fig. 3      ein Ausführungsbeispiel eines Steuerungsmoduls,

Fig. 4      ein Ausführungsbeispiel eines Auslösemoduls,

Fig. 5      Merkmalsgeneratoren,

Fig. 6      ein Ausführungsbeispiel eines Ausgangssignals eines Kollisionssensors,

Fig. 7      das Integral des Ausgangssignals gemäß Fig. 6 in einem Zeitintervall,

Fig. 8      ein Ausführungsbeispiel eines neuronalen Netzes,

Fig. 9      ein Ausführungsbeispiel eines Entscheidungsbaumes,

Fig. 10      ein Ausführungsbeispiel eines Verfahrens zum Herstellen eines Kollisions- und/oder Personenschutzsystems,

Fig. 11      ein Ausführungsbeispiel eines zur Bewertung von Merkmalssignalen verwend- baren Systems,

Fig.12      Merkmalsgeneratoren.

Fig. 13      ein Ausführungsbeispiel einer Wichtungsfunktion und

Fig. 14      ein Ausführungsbeispiel eines Verfahrens zum Herstellen eines Kraftfahrzeuges.

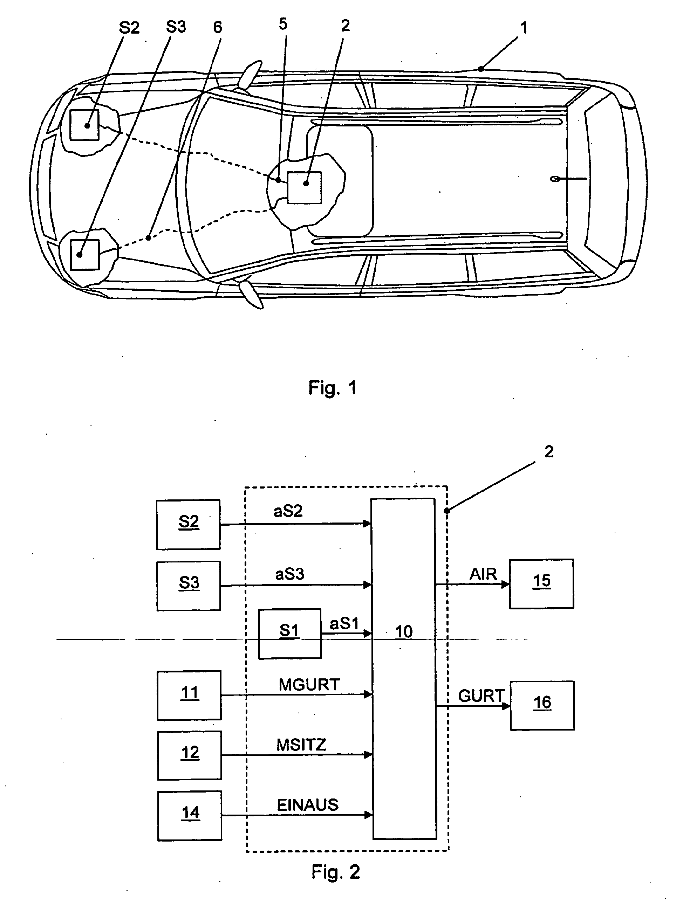

Fig. 1 zeigt eine Draufsicht auf ein Kraftfahrzeug 1 mit einem - in Fig. 2 in Form eines Blockschaltbildes dargestellten - aktiven Insassenschutzsystems als Ausführungsbeispiel für ein Kollisions- und/oder Personenschutzsystem. Das aktive Insassenschutzsystem umfasst zumindest einen - nicht in Fig. 1 jedoch in Fig. 2 dargestellten - Airbag 15 und/oder einen - nicht in Fig. 1 jedoch in Fig. 2 dargestellten - Gurtstraffer 16. Das aktive Insassenschutzsystem umfasst zudem ein Steuergerät 2 zum Auslösen des Airbags 15 und/oder des Gurtstraffers 16 sowie einen in die rechte vordere Seite des Kraftfahrzeuges 1 integrierten Kollisionssensor S2 und einen in die linke vordere Seite des Kraftfahrzeuges 1 integrierten Kollisionssensor S3. Die Kollisionssensoren S2 und S3 sind mit dem Steuergerät 2 durch Zuleitungen 5 und 6 verbunden.

Die Kollisionssensoren S2 und S3 sowie ein weiterer - wie in Fig. 2 dargestellt in das Steuergerät 2 integrierter - Kollisionssensor S1 sind gemäß dem vorliegenden Ausführungsbeispiel als Beschleunigungssensoren ausgebildet. Die Kollisionssensoren S1, S2 und S3 liefern als Ausgangssignale Beschleunigungswerte aS1, aS2 bzw. aS3.

Das aktive Insassenschutzsystem umfasst zudem einen Gurtsensor 11 zum Erkennen, ob ein Sicherheitsgut angelegt ist, und zur Ausgabe einer entsprechenden Gurtinformation MGURT. Das aktive Insassenschutzsystem umfasst weiterhin einen Sitzbelegungssensor 12 zum Erkennen, ob bzw. wie ein Sitz belegt ist, und zur Ausgabe einer entsprechenden Sitzbelegungsinformation MSITZ. Es kann weiterhin vorgesehen sein, dass das aktive Insassenschutzsystem ein Bedienelement 14 zur Aktivierung bzw. Deaktivierung des Airbags 15 umfasst. Ein entsprechendes Schaltsignal ist mit Bezugzeichen EINAUS bezeichnet. Das Steuergerät 2 umfasst ein Steuerungsmodul 10 zur Berechnung und Ausgabe eines Zündsignals AIR für den Airbag 15 und/oder eines Zündsignals GURT für den Gurtstraffer 16 in Abhängigkeit der Beschleunigungswerte aS1, aS2 bzw. aS3, der Gurtinformation MGURT, der Sitzbelegungsinformation MSITZ und des Schaltsignals EINAUS.

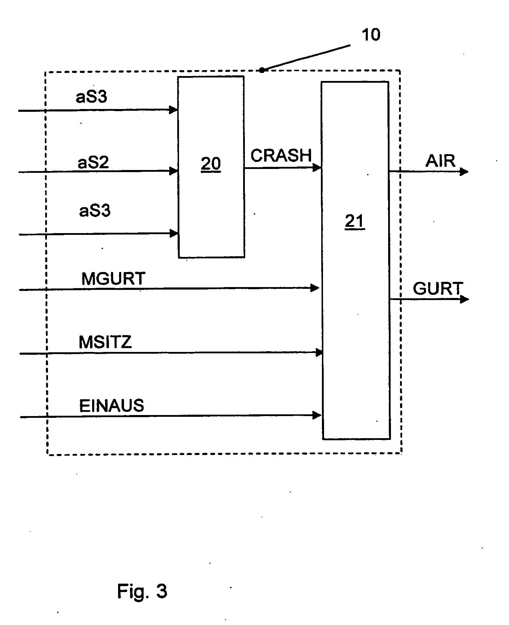

Fig.3 zeigt das Steuerungsmodul 10 in einer beispielhaften Ausgestaltung. Das Steuerungsmodul 10 umfasst ein Auslösemodul 20 zur Berechnung und Ausgabe eines Zündvorschlags CRASH in Abhängigkeit der Beschleunigungswerte aS1, aS2 bzw. aS3. Das Steuerungsmodul 10 umfasst zudem eine Feuertabelle 21 zur Berechnung und Ausgabe des Zündsignals AIR für den Airbag 15 und/oder des Zündsignals GURT für den Gurtstraffer 16 in Abhängigkeit des Zündvorschlags CRASH, der Gurtinformation MGURT, der Sitzbelegungsinformation MSITZ und des Schaltsignals EINAUS. So kann z.B. vorgesehen werden, dass das Zündsignal AIR nur dann gleich dem Zündvorschlag CRASH ist, wenn ein entsprechender Sitz mit einer Person einer gewissen Größe belegt ist, und dass das Zündsignal AIR andernfalls gleich 0 ist.

Sowohl der Zündvorschlag CRASH als auch die Zündsignale AIR und GURT können Zündsignale im Sinne der Ansprüche sein. Sowohl der Zündvorschlag CRASH als auch die Zündsignale AIR und GURT können ein - z.B. dem in der DE 100 35 505 A1 beschriebenen "FIRE/NO-FIRE"-Signal entsprechendes - binäres Signal sein, das angibt, ob ein Insassenschutzaktor, wie ein Airbag und/oder ein Gurtstraffer, ausgelöst werden soll. Sowohl der Zündvorschlag CRASH als auch die Zündsignale AIR und GURT können auch ein komplexeres Signal sein. Sowohl der Zündvorschlag CRASH als auch das Zündsignal AIR können z.B. ein komplexeres Signal sein, das angibt, in welchem Ausmaß (z.B. Stufe 1 oder Stufe 2) der Airbag 15 gezündet werden soll. Sowohl der Zündvorschlag CRASH als auch das Zündsignal AIR können z.B. zudem einen in der DE 100 35 505 A1 beschriebenen Crashschwereparameter bzw. eine Insassenbeschleunigung bzw. -belastung umfassen.

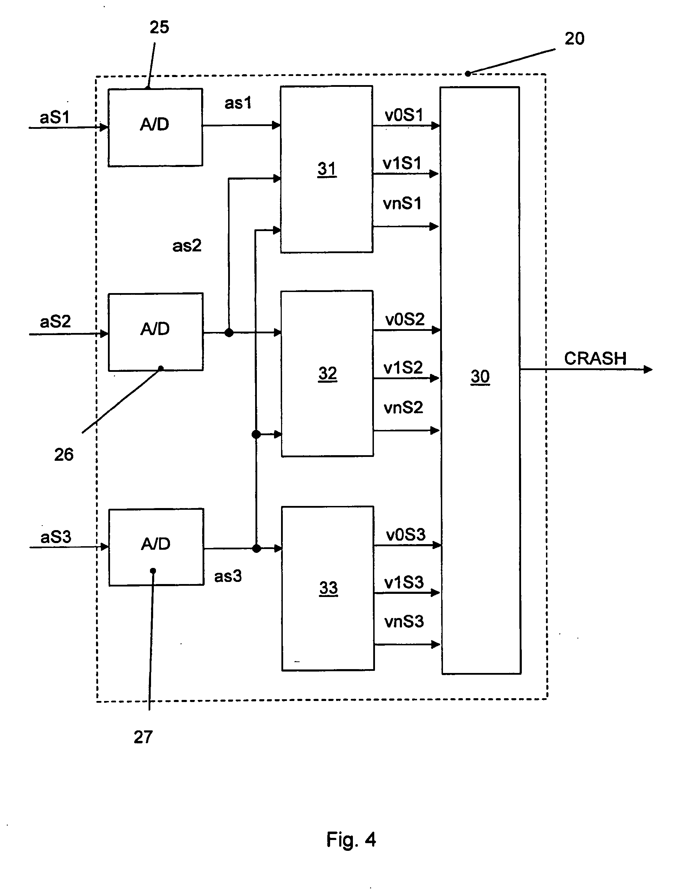

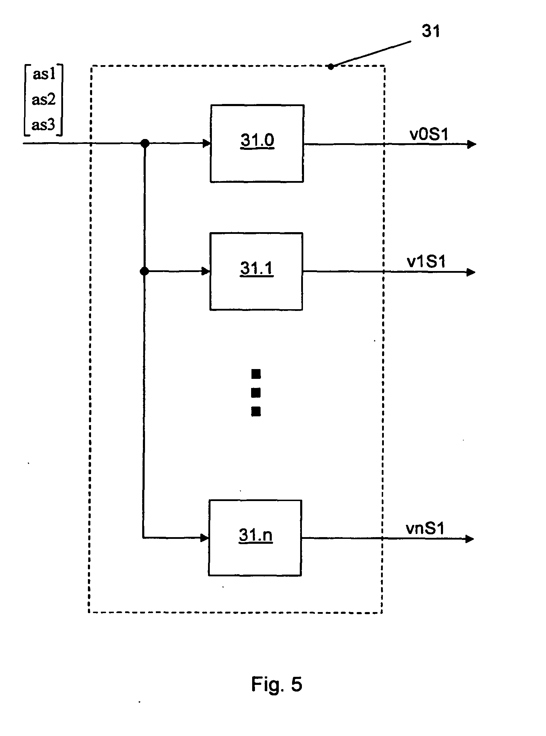

Fig. 4 zeigt das Auslösemodul 20 in einer beispielhaften Ausgestaltung. Das Auslösemodul 20 umfasst einen A/D-Wandler 25 (analog/digtal-Wandler) zum Abtasten des Beschleunigungswertes aS1 und zur Ausgabe eines abgetasteten Beschleunigungswertes as1, einen A/D-Wandler 26 zum Abtasten des Beschleunigungswertes aS2 und zur Ausgabe eines abgetasteten Beschleunigungswertes as2 und einen A/D-Wandler 27 zum Abtasten des Beschleunigungswertes aS3 und zur Ausgabe eines abgetasteten Beschleunigungswertes as3. Die Abtastfrequenz $\Delta t$ der A/D-Wandler 25, 26 und 27 kann z.B. 4 kHz betragen. Das Auslösemodul 20 umfasst aus aS1. aS2 bzw. aS3 Merkmalssignale v0S1, v1S1 ... vnS1, v0S2, v1S2 ... vnS2 und v0S3, v1S3 ... vnS3 generierende Merkmalsgeneratoren (z.B. 31.0, 31.1 ... 31.n, vgl. Fig. 5), die aus Gründen der Übersichtlichkeit in Fig. 4 in Blöcke 31, 32 und 33 gruppiert sind. Es kann vorgesehen sein, dass ein Merkmalsgenerator, wie z.B. der Merkmalsgenerator 31.n, durch eine Übertragungsfunktion 1 ersetzt wird. So kann z.B. vorgesehen sein, dass vnS1 = aS1, dass vnS2 = aS2 und/oder dass vnS3 = aS3.

Ein Merkmalssignal kann z.B. ein Integral über ein Zeitfenster sein. So kann z.B. v0S1 zu einem Zeitpunkt $t_0$ gemäß

$$v0S1 = \int_{t_0 - \tau_0}^{t_0} as1 \cdot dt$$

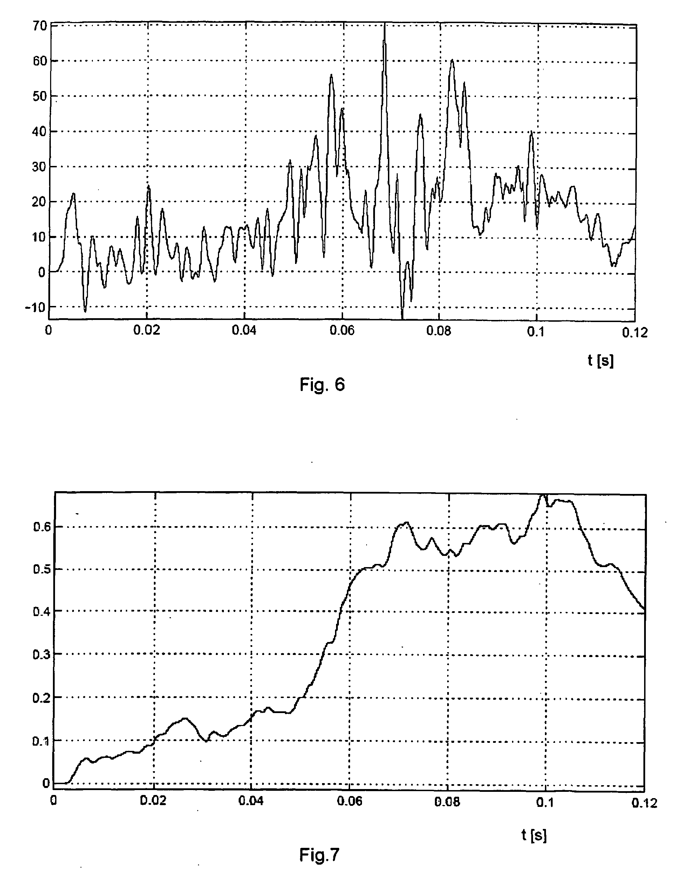

ermittelt werden, wobei $\tau_0$ die Länge eines Zeitintervalls $[t_0-\tau_0, t_0]$ (Fensterbreite) ist. Der Zeitpunkt $t_0$ bezeichnet den aktuellen Zeitpunkt, also den aktuellen Wert der Zeit t. Fig. 7 zeigt ein Ausführungsbeispiel eines derartigen aus einem in Fig. 6 dargestellten Beschleunigungssignal erzeugten Merkmalsignals für $\tau_0$ = 24ms. Es können unterschiedliche Merkmalsgeneratoren mit unterschiedlichen Werten für $\tau_0$ vorgesehen werden.

Die Merkmalssignale v0S1, v1S1 ... vnS1, v0S2, v1S2 ... vnS2 und v0S3, v1S3 ... vnS3 können auch Differenzen der Beschleunigungswerte as1, as2 bzw. as3, wie z.B. as2-as1, oder Umwandlungen dieser Differenzen umfassen.

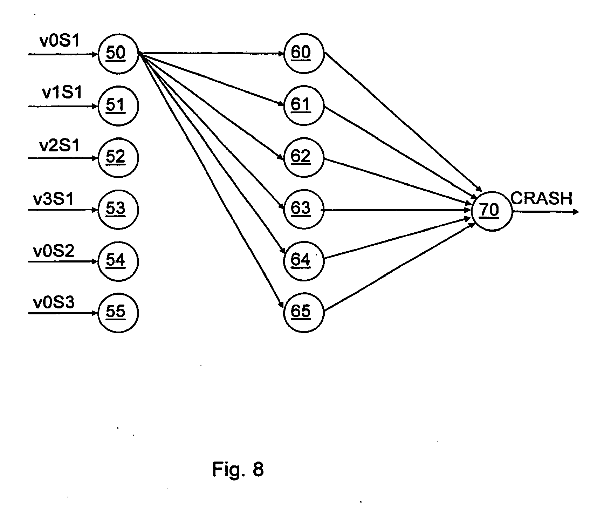

Das Auslösemodul 20 umfasst weiterhin eine Auslöseerzeugung 30 zur Erzeugung des Zündvorschlags CRASH. Die Auslöseerzeugung 30 kann z.B. als neuronales Netz ausgebildet sein, wie es in Fig. 8 in beispielhafter Ausgestaltung dargestellt ist, wobei angenommen ist, dass Merkmalssignale v0S1, v1S1, v2S1, v3S1, v0S2 und v0S3 erzeugt werden. Das in Fig. 8 dargestellte neuronale Netz umfasst sechs Eingangsknoten 50, 51, 52, 53, 54, 55, sechs verdeckte Knoten 60, 61, 62, 63, 64, 65 und einen Ausgangsknoten 70, wobei jeder Eingangsknoten 50, 51, 52, 53, 54, 55 mit jedem verdeckten Knoten 60, 61, 62, 63, 64, 65 und jeder verdeckte Knoten 60, 61, 62, 63, 64, 65 mit dem Ausgangsknoten 70 verbunden ist. In Fig.8 sind jedoch aus Gründen der Übersichtlichkeit nicht alle Verbindungen zwischen den Eingangsknoten 50, 51, 52, 53, 54, 55 und den verdeckten Knoten 60, 61, 62, 63, 64, 65 dargestellt.

Eingangsgröße in den Eingangsknoten 50 ist das Merkmalssignal v0S1, Eingangsgröße in den Eingangsknoten 51 ist das Merkmalssignal v1S1, Eingangsgröße in den Eingangsknoten 52 ist das Merkmalssignal v2S1, Eingangsgröße in den Eingangsknoten 53 ist das Merkmalssignal v3S1, Eingangsgröße in den Eingangsknoten 54 ist das Merkmalssignal v0S2, und Eingangsgröße in den Eingangsknoten 55 ist das Merkmalssignal v0S3. Ausgangsgröße aus dem Ausgangsknoten 70 ist der Zündvorschlag CRASH.

Die Auslöseerzeugung 30 kann alternativ z.B. auch als Abfolge von Vergleichen mit Grenzwerten ausgestaltet werden. Tabelle 1 zeigt eine solche Abfolge von Vergleichen mit Grenzwerten, wobei der in Tabelle 1 dargestellte Code durch ein Lernverfahren automatisch erzeugt worden ist, und wobei angenommen ist, dass Merkmalssignale v0S1, v1S1, v2S1, v0S2 und v0S3 erzeugt werden.

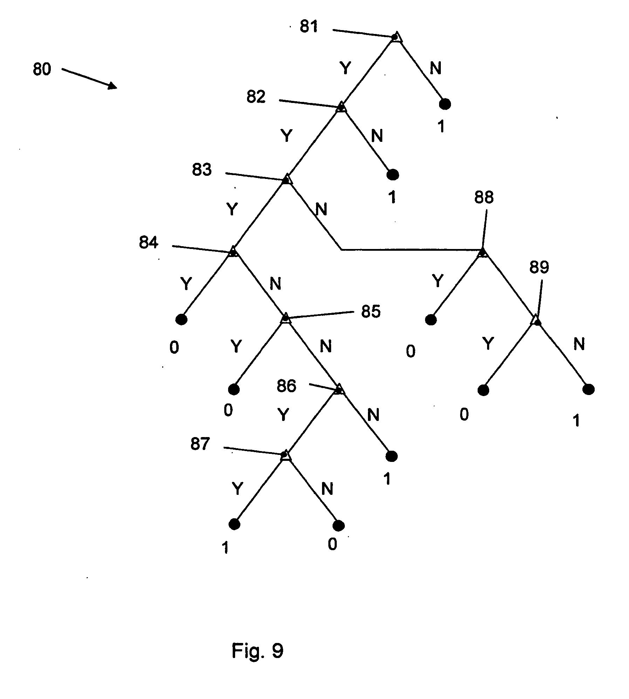

Fig. 9 zeigt den Code gemäß Tabelle 1 in einer Darstellung als Entscheidungsbaum 80. Dabei bezeichnet Bezugszeichen 81 die Abfrage, ob v0S3 kleiner ist als ein Grenzwert $\delta_{v0S3}$. Bezugszeichen 82 bezeichnet die Abfrage, ob v0S2 kleiner ist als ein Grenzwert $\delta_{v0S2}$. Bezugszeichen 83 bezeichnet die Abfrage, ob v2S1 kleiner ist als ein Grenzwert $\delta_{v2S1}$. Bezugszeichen 84 bezeichnet die Abfrage, ob v0S1 kleiner ist als ein Grenzwert $\delta_{v0S1}$. Bezugszeichen 85 bezeichnet die Abfrage, ob v0S3 kleiner ist als ein Grenzwert $\delta_{v0S3,2}$. Bezugszeichen 86 bezeichnet die Abfrage, ob v0S1 kleiner ist als ein Grenzwert $\delta_{v0S1,2}$. Bezugszeichen 87 bezeichnet die Abfrage, ob v1S1 kleiner ist als ein Grenzwert $\delta_{v1S1}$. Bezugszeichen 88 bezeichnet die Abfrage, ob v0S2 kleiner ist als ein Grenzwert $\delta_{v0S2,2}$. Bezugszeichen 89 bezeichnet die Abfrage, ob v0S3 kleiner ist als ein Grenzwert $\delta_{v0S3,3}$.

## Tabelle 1

```
/* Evaluation function */
int evaluate_Action(double *x)
{
        int CRASH;

        if (vOS3 < δ_vOS3 ) {
                if (vOS2 < δ_vOS2 ) {
                        if (v2S1 < δ_v2S1 ) {
                                if (vOS1 < δ_vOS1 ) {
                                        CRASH = 0;
                                } else {
                                        if (vOS3 < δ_vOS3,2 ) {
                                                CRASH = 0;
                                        } else {
                                                if (vOS1 < δ_vOS1,2 ) {
                                                        if (v1S1 < δ_v1S1 ) {
                                                                CRASH = 1;
                                                        } else {
                                                                CRASH = 0;
                                                        }
                                                } else {
                                                        CRASH = 1;
                                                }
                                        }
                                }
                        } else {
                                if (vOS2 < δ_vOS2,2 ) {
                                        CRASH = 0;
                                } else {
                                        if (vOS3 < δ_vOS3,3 ) {
                                                CRASH = 0;
                                        } else {
                                                CRASH = 1;
                                        }
                                }
                        }
                } else {
                        CRASH = 1;
                }
        } else {
                CRASH = 1;
        }
        return (CRASH);
}
```

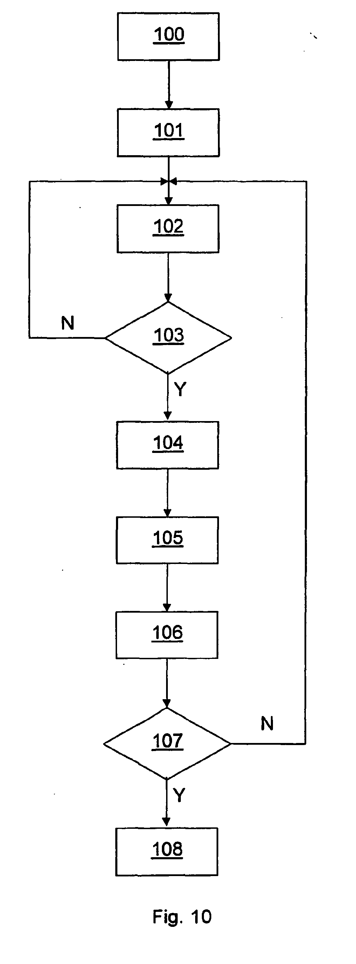

Fig. 10 zeigt ein Ausführungsbeispiel eines Verfahrens zum Herstellen des unter Bezugnahme auf die vorhergehenden Figuren beschriebenen Personen- bzw. Insassenschutzsystems. Dabei werden in einem Schritt 100 Merkmalsgeneratoren bereitgestellt. Diese Merkmalsgeneratoren können Integratoren (ein- oder mehrfach), Differenzierer (ein- oder mehrfach), Fensterintegratoren, Tief- oder Bandpassfilter, Fouriertransformatoren, Wavelettransformatoren, Maximum-/Minimumanalysen, Differenzbildner (der Signale unterschiedlicher Kollisionssensoren), Absolutwertbildner usw. umfassen. Zur Erweiterung möglicher Merkmalsgeneratoren können auch Zufallselemente bei deren Generierung eingesetzt werden (z. B. variable Schwankung von Fensterintegralbreiten, Filterkoeffizienten, etc.).

In einem anschließenden Schritt 101 wird eine Kostenfunktion gebildet. Eine besonders geeignete Kostenfunktion K ist z.B.

$$K = \frac{1}{TEST} \sum_{j=1}^{TEST} \left( \frac{\sum_{i=1}^{i_{END}} \gamma(i,j) \cdot I(CRASH\_LEARN(i,j), CRASH\_TRUE(i,j))}{\sum_{i=1}^{i_{END}} \gamma(i,j)} \right)$$

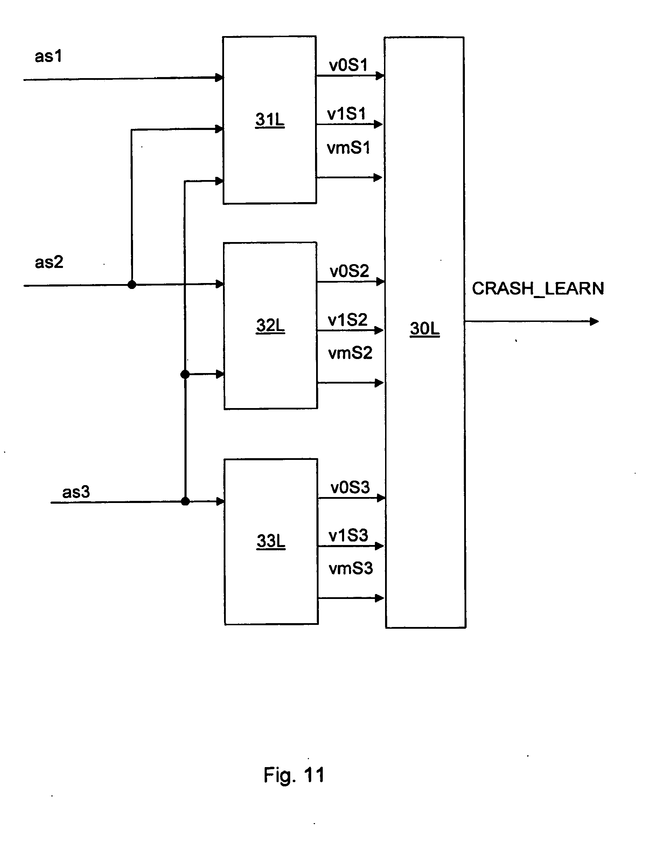

wobei CRASH_LEARN(i) ein mittels eines in Fig. 11 dargestellten Systems erzeugtes - dem Zündvorschlag CRASH entsprechendes - Zündsignal zu Zeitpunkten i bezeichnet.

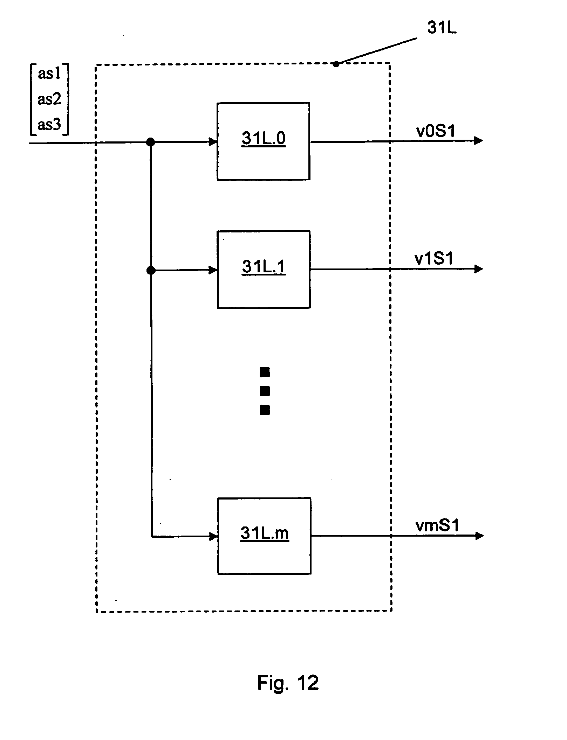

Das in Fig. 11 dargestellte System umfasst die im Schritt 100 generierten - aus aS1, aS2 bzw. aS3 Merkmalssignale v0S1, v1S1 ... vmS1, v0S2, v1S2 ... vmS2 und v0S3, v1S3 ... vmS3 generierende - Merkmalsgeneratoren (z.B. 31L.0, 31L.1 ... 31 L.m, vgl. Fig. 12), die aus Gründen der Übersichtlichkeit in Fig. 11 in Blöcke 31 L, 32L und 33L gruppiert sind. m ist größer oder gleich n gemäß Fig. 4 bzw. Fig. 5. Es kann vorgesehen sein, dass ein Merkmalsgenerator, wie z.B. der Merkmalsgenerator 31 L.m, durch eine Übertragungsfunktion 1 ersetzt wird. So kann z.B. vorgesehen sein, dass vnS1 = aS1, dass vnS2 = aS2 und/oder dass vnS3 = aS3. In den folgenden Schritten wird eine eventuell vorgesehene Übertragungsfunktion 1 wie eines der Merkmale behandelt.

Bezugszeichen 30L bezeichnet eine von der Auslöseerzeugung 30 zu unterscheidende Auslöseerzeugung zur Erzeugung des Zündsignals CRASH_LEARN. Die Auslöseerzeugung 30L (z. B. implementiert durch Support-Vector-Machines, Ensemble-Methoden, Random Forests, AdaBoost) ist deutlich komplexer als die Auslöseerzeugung 30 und aufgrund seiner Komplexität in der Regel nicht zur Implementierung in einem Steuergerät für ein Kraftfahrzeug geeignet. So kann die Auslöseerzeugung 30L z.B. mehrere hundert Entscheidungsbäume umfassen, wobei das Zündsignal CRASH_LEARN z.B. durch Mehrheitsentscheid erzeugt wird.

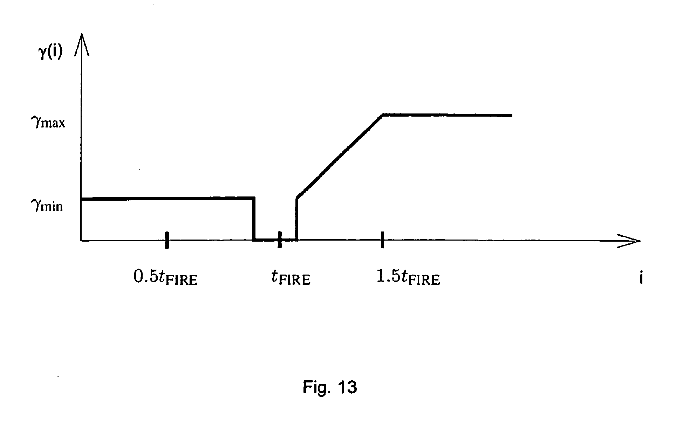

$\gamma(i)$ bezeichnet eine über die Zeit i variable Wichtungsfunktion, wie sie beispielhaft in Fig. 13 dargestellt ist. Dabei bezeichnet $t_{FIRE}$ den optimalen Auslösezeitpunkt. $\gamma_{min}$ und $\gamma_{max}$ bezeichnen von einer Unfallschwere abhängige Werte. I(CRASH_LEARN(i),CRASH_TRUE(i)) bezeichnet eine Indikatorfunktion mit

$$I(CRASH\_LEARN(i), CRASH\_TRUE(i)) = \begin{cases} 0 & \text{für } CRASH\_LEARN(i) \neq CRASH\_TRUE(i) \\ 1 & \text{für } CRASH\_LEARN(i) = CRASH\_TRUE(i) \end{cases}$$

wobei CRASH_TRUE(i) das gewünschte Zündsignal mit dem gewünschten Zündzeitpunkt bzw. optimalen Auslösezeitpunkt $t_{FIRE}$ bezeichnet. Die Wichtung erfolgt für mehrere Testdatensätze, d.h. für das vorliegende Ausführungsbeispiel werden verschiedene aS1, aS2 und aS3 gebildet. Dabei bezeichnet j den einem Testdatensatz zugeordneten Index und TEST die Gesamtzahl der verwendeten Testdatensätze.

Dem Schritt 101 folgt ein Schritt 102, in dem eines der Merkmalssignale v0S1, v1S1 ... vmS1, v0S2, v1S2 ... vmS2 und v0S3, v1S3 ... vmS3 weggelassen und die Kostenfunktion K für die verbleibenden Merkmalssignale berechnet wird. Durch Vergleich dieser Kostenfunktion K mit der auf allen Merkmalssignalen v0S1, v1S1 ... vmS1, v0S2, v1S2 ... vmS2 und v0S3, v1S3 ... vmS3 basierenden Kostenfunktion K wird das weggelassene Merkmalssignal bewertet. Dabei wird das weggelassene Merkmalssignal hoch bewertet, wenn sich die Kostenfunktion K deutlich verschlechtert und niedrig bewertet, wenn sich die Kostenfunktion K nicht deutlich verschlechtert. Dem Schritt 102 folgt eine Abfrage, ob jedes Merkmalssignal v0S1, v1S1 ... vmS1, v0S2, v1S2 ... vmS2 und v0S3, v1S3 ... vmS3 einmal weggelassen worden ist. Ist jedes Merkmalssignal v0S1, v1S1 ... vmS1, v0S2, v1S2... vmS2 und v0S3, v1S3 ... vmS3 einmal weggelassen worden, so folgt der Abfrage 103 ein Schritt 104. Andernfalls folgt der Abfrage 103 Schritt 102, wobei ein noch nicht weggelassenes Merkmalssignal weggelassen wird.

Im Schritt 104 wird das Merkmalssignal mit der niedrigsten Bewertung bzw. der entsprechende Merkmalsgenerator zur Erzeugung dieses Merkmalssignals aus dem in Fig. 11 dargestellten System entfernt.

Schritt 104 folgt ein Schritt 105, in dem eine zur Verwendung als Auslöseerzeugung 30 geeignete Auslöseerzeugung ausgewählt, erzeugt und/oder trainiert wird. Bei gegebener Kostenfunktion kann die verwendete Auslöseerzeugung automatisch durch Lösung einer Optimierungsaufgabe parametriert werden (z. B. Gradientenabstiegsverfahren, Newton-Methoden, genetische Algorithmen ...).

In einem anschließenden Schritt 106 wird die Kostenfunktion K für das in Fig. 11 dargestellte (jedoch um den entfernten Merkmalsgenerator reduzierte) System ermittelt, wobei die Auslöseerzeugung 30L durch die in Schritt 105 ermittelte Auslöseerzeugung ersetzt ist. Für die Schritte 105 und 106 werden vorteilhafterweise unterschiedliche Datensätze für as1, as2 und as3 verwendet. Unterschiedliche Datensätze in diesem Sinne können z.B. durch einen unabhängigen Datensatz, durch Methoden wie Kreuzvalidierungen (engl. Cross-Validation) oder bei Bootstrap-basierten Verfahren (Random Forests) durch den "Out-Of-Bag"-Schätzwert gewonnen werden.

Es folgt eine Abfrage 107, ob die in Schritt 106 ermittelte Kostenfunktion K (um einen Schwellwert) kleiner ist, als die in Schritt 101 ermittelte Kostenfunktion K. Ist die in Schritt 106 ermittelte Kostenfunktion K nicht (um einen Schwellwert) kleiner als die in Schritt 101 ermittelte Kostenfunktion K, so folgt der Abfrage 107 Schritt 102. Andernfalls folgt der Abfrage 107 ein Schritt 108, in dem die aktuellen Merkmalsgeneratoren zuzüglich des zuletzt entfernten Merkmalsgenerators zur Implementierung in dem Auslösemodul 20 ausgewählt (und implementiert) werden. Darüber hinaus wird die in Verbindung mit den ausgewählten Merkmalsgeneratoren im Schritt 105 ausgewählte, erzeugte und/oder trainierte Auslöseerzeugung als Auslöseerzeugung 30 verwendet.

In Ergänzung zum vorbeschriebenen Verfahren zur Reduktion von Merkmalsgeneratoren bzw. entsprechender Merkmalssignale kann durch Verwendung eines Dimensionsreduzierungsalgorithmus (z. B. Principal Component Analysis oder Independent Component Analysis) die Anzahl der ermittelten Merkmalsgeneratoren weiter reduziert werden, wodurch der Klassifikationsalgorithmus vereinfacht werden kann. Hiermit ist unter Anderem eine Einsparung von Steuergeräteressourcen (Rechnerleistung, -speicher) möglich. Des Weiteren wird die Interpretierbarkeit des Klassifikationsalgorithmus erhöht.

Alternativ oder in Ergänzung zur Verwendung einer Kostenfunktion bzw. der Kostenfunktion K können statistische Methoden (z. B. durch Hypothesentests, Monte-Carlo-Simulationen oder Bootstrapping) verwendet werden.

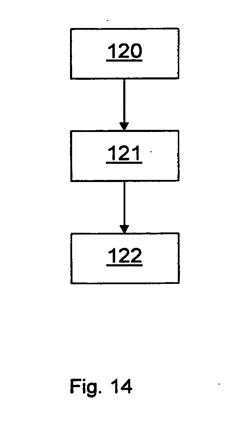

Fig. 14 ein Ausführungsbeispiel eines Verfahrens zum Herstellen eines Kraftfahrzeuges, wobei ein mit Bezugzeichen 120 bezeichneter Schritt das unter Bezugnahme auf Fig. 10 beschriebene Verfahren umfasst. In einem Schritt 121 werden entsprechende Personenschutzaktoren und in einem Schritt 122 entsprechende Kollisionssensoren in dem Kraftfahrzeug implementiert.

## BEZUGSZEICHENLISTE

| | |
|---|---|
| 1 | Kraftfahrzeug |
| 2 | Steuergerät |
| 5, 6 | Zuleitungen |
| 10 | Steuerungsmodul |
| 11 | Gurtsensor |
| 12 | Sitzbelegungssensor |
| 14 | Bedienelement |
| 15 | Airbag |
| 16 | Gurtstraffer |
| 20, 120, 220, 320 | Auslösemodul |
| 21 | Feuertabelle |
| 25, 26, 27 | A/D-Wandler |
| 30, 30L | Auslöseerzeugung |
| 31,32,33, 31L, 32L, 33L | Block |
| 31.0, 31.1, 31.n, 31L.0, 31L.1, 31 L.m, | Merkmalsgenerator |
| 50, 51, 52, 53, 54, 55 | Eingangsknoten |
| 60, 61, 62, 63, 64, 65 | verdeckter Knoten |
| 70 | Ausgangsknoten |
| 80 | Entscheidungsbaum |
| 81, 82, 83, 84, 85, 86, 87, 88, 89, 103, 107 | Abfrage |
| 100, 101, 102, 104, 105, 106, | |

| 108, 120, 121, 122 | Schritt |
| AIR, GURT | Zündsignal |
| aS1, aS2, aS3, as1, as2, as3 | Beschleunigungswert |
| CRASH | Zündvorschlag |
| CRASH_LEARN | Zündsignal |
| EINAUS | Schaltsignal |
| MGURT | Gurtinformation |
| MSITZ | Sitzbelegungsinformation |
| S1, S2, S3 | Kollisionssensor |
| i, t | Zeit |
| $t_0$ | aktueller Zeitpunkt |
| $t_{FIRE}$ | optimaler Auslösezeitpunkt |
| v0S1, v1S1, v2S1, v3S1, vmS1, vnS1, v0S2, v1S2, vmS2, vnS2, v0S3, v1S2, vmS3, vnS3 | Merkmalssignal |
| $\gamma(i)$ | zeitvariable Wichtungsfunktion |
| $\gamma_{min}, \gamma_{max}$ | von einer Unfallschwere abhängiger Wert |

**Patentansprüche**

1. Kollisions- und/oder Personenschutzsystem für ein Kraftfahrzeug (1), mit zumindest einem Kollisionssensor (S1) zum Messen einer zur Kollisionserkennung geeigneten Größe (aS1) des Kraftfahrzeuges (1), wobei das Kollisions- und/oder Personenschutzsystem einen mittels eines Zündsignals (CRASH, AIR, GURT) steuerbaren Personenschutzaktor (15, 16) oder eine mittels des Zündsignals steuerbare Warnvorrichtung und ein Steuergerät (2) zur Ermittlung des Zündsignals (CRASH, AIR, GURT) in Abhängigkeit eines aus der mittels des Kollisionssensors (S1) gemessenen Größe (aS1) gebildeten Merkmalssignals (v0S1) umfasst, **dadurch gekennzeichnet, dass** das Kollisions- und/oder Personenschutzsystem einen automatisch ausgewählten Merkmalsgenerator (31.0) zur Bildung des Merkmalssignals (v0S1) in Abhängigkeit der mittels des Kollisionssensors (S1) gemessenen Größe (aS1) umfasst.

2. Kollisions- und/oder Personenschutzsystem nach Anspruch 1, **dadurch gekennzeichnet, dass** die mittels des Kollisionssensors (S1) gemessene Größe (aS1) eine Bewegungsgröße ist.

3. Verfahren zum Herstellen eines Kollisions- und/oder Personenschutzsystems für ein Kraftfahrzeug (1), nach einem der vorhergehenden Ansprüche, mit zumindest einem Kollisionssensor (S1) zum Messen einer zur Kollisionserkennung geeigneten Größe (aS1) des Kraftfahrzeuges (1), wobei das aktive Kollisions- und/oder Personenschutzsystem einen mittels eines Zündsignals (CRASH, AIR, GURT) steuerbaren Personenschutzaktor (15, 16) und ein Steuergerät (2) zur Ermittlung des Zündsignals (CRASH, AIR, GURT) in Abhängigkeit eines aus der mittels des Kollisionssensors (S1) gemessenen Größe (aS1) gebildeten Merkmalssignals (v0S1) umfasst, **dadurch gekennzeichnet, dass** ein zur Implementierung in dem Kollisions- und/oder Personenschutzsystem vorgesehener Merkmalsgenerator (31.0) zur Bildung des Merkmalssignals (v0S1) automatisch ausgewählt wird.

4. Verfahren nach Anspruch 3, **dadurch gekennzeichnet, dass** der zur Implementierung in dem Kollisions- und/oder Personenschutzsystem vorgesehene Merkmalsgenerator (31.0) zur Bildung des Merkmalssignals (v0S1) automatisch aus einer Menge von Merkmalsgeneratoren (31.0, 31,1 ... 31.m) zur Bildung zumindest je eines Merkmalssignals (v0S1, v1S1 ... vmS1) ausgewählt wird.

5. Verfahren nach Anspruch 3 oder 4, **dadurch gekennzeichnet, dass** die Auswahl des Merkmalsgenerators (31.0) in Abhängigkeit einer Kostenfunktion erfolgt.

6. Verfahren nach Anspruch 5, **dadurch gekennzeichnet, dass** die Kostenfunktion in Abhängigkeit eines Zündsignals (CRASH_LEARN) gebildet wird, das in Abhängigkeit des Merkmalssignals (v0S1) gebildet wird.

7. Verfahren nach Anspruch 6, **dadurch gekennzeichnet, dass** die Kostenfunktion zudem in Abhängigkeit eines gewünschten Zündsignals gebildet wird.

8. Verfahren nach Anspruch 5, **dadurch gekennzeichnet, dass** die Kostenfunktion in Abhängigkeit der Differenz eines gewünschten Zündsignals und eines Zündsignals (CRASH_LEARN) gebildet wird, das in Abhängigkeit des Merkmalssignals (vOS1) gebildet wird.

9. Verfahren nach Anspruch 8, **dadurch gekennzeichnet, dass** die Differenz zeitabhängig gewichtet wird.

10. Verfahren nach Anspruch 4, **dadurch gekennzeichnet, dass** für jeden Merkmalsgenerator (31.0) aus der Menge der Merkmalsgeneratoren (31.0, 31,1 ... 31.m) zumindest je ein Merkmalssignal (v0S1) erzeugt wird, wobei ein Zündsignal (CRASH_LEARN) aus den Merkmalssignalen (v0S1, v1S1 ... vmS1) gebildet wird, und wobei in Abhängigkeit des Zündsignals (CRASH_LEARN) eine Kostenfunktion gebildet wird.

11. Verfahren nach Anspruch 10, **dadurch gekennzeichnet, dass** die Kostenfunktion in Abhängigkeit einer Differenz zwischen einem gewünschten Zündsignal und dem von den Merkmalssignalen (v0S1, v1S1 ... vmS1) abhängigen Zündsignal (CRASH_LEARN) gebildet wird.

12. Verfahren nach Anspruch 11, **dadurch gekennzeichnet, dass** die Differenz zeitabhängig gewichtet wird.

13. Verfahren nach einem der Ansprüche 3 bis 12, **dadurch gekennzeichnet, dass** der automatisch ausgewählte Merkmalsgenerator (31.0) in dem Kollisions- und/oder Personenschutzsystem implementiert wird.

14. Verfahren zum Herstellen eines Kraftfahrzeuges (1) mit einem Kollisions- und/oder Personenschutzsystem, **dadurch gekennzeichnet, dass** ein Verfahren nach einem der Ansprüche 3 bis 12 in dem Kraftfahrzeug implementiert wird.

15. Verfahren nach Anspruch 14, **dadurch gekennzeichnet, dass** ein Kollisionssensor (S1) zum Messen einer zur Kollisionserkennung geeigneten Größe (aS1) des Kraftfahrzeuges (1) in dem Kraftfahrzeug (1) implementiert und derart datentechnisch mit dem Merkmalsgenerator (31.0) verbunden wird, dass mittels des Merkmalsgenerators (31.0) ein Merkmalssignal (v0S1) in Abhängigkeit der mittels des Kollisionssensors (S1) gemessenen Größe (aS1) erzeugbar ist.

16. Verfahren nach Anspruch 15, **dadurch gekennzeichnet, dass** ein mittel eines in Abhängigkeit des Merkmalssignals erzeugbaren Zündsignals (CRASH, AIR, GURT) steuerbarer Personenschutzaktor (15, 16) in dem Kraftfahrzeug implementiert wird.

**Claims**

1. Collision and/or passenger protection system for a motor vehicle (1), having at least one collision sensor (S1) for measuring a variable (aS1) of the motor vehicle (1), which variable is suitable for detecting a collision, the collision and/or passenger protection system comprising a passenger protection actuator (15, 16), which can be controlled using a firing signal (CRASH, AIR, BELT), or a warning device, which can be controlled using the firing signal, and a control device (2) for determining the firing signal (CRASH, AIR, BELT) on the basis of a feature signal (v0S1) formed from the variable (aS1) measured using the collision sensor (S1), **characterized in that** the collision and/or passenger protection system comprises an automatically selected feature generator (31.0) for forming the feature signal (vOS1) on the basis of the variable (aS1) measured using the collision sensor (S1).

2. Collision and/or passenger protection system according to Claim 1, **characterized in that** the variable (aS1) measured using the collision sensor (S1) is a movement variable.

3. Method for producing a collision and/or passenger protection system for a motor vehicle (1) according to one of the preceding claims, having at least one collision sensor (S1) for measuring a variable (aS1) of the motor vehicle (1), which variable is suitable for detecting a collision, the active collision and/or passenger protection system comprising a passenger protection actuator (15, 16), which can be controlled using a firing signal (CRASH, AIR, BELT), and a control device (2) for determining the firing signal (CRASH, AIR, BELT) on the basis of a feature signal (v0S1) formed from the variable (aS1) measured using the collision sensor (S1), **characterized in that** a feature generator (31.0) which is intended to be implemented in the collision and/or passenger protection system and is intended to form the feature signal (v0S1) is automatically selected.

4. Method according to Claim 3, **characterized in that** the feature generator (31.0) which is intended to be implemented in the collision and/or passenger protection system and is intended to form the feature signal (v0S1) is automatically selected from a set of feature generators (31.0, 31.1...31.m) for forming at least one respective feature signal (v0S1, v1S1...vmS1).

5. Method according to Claim 3 or 4, **characterized in that** the feature generator (31.0) is selected on the basis of a cost function.

6. Method according to Claim 5, **characterized in that** the cost function is formed on the basis of a firing signal (CRASH_LEARN) which is formed on the basis of the feature signal (v0S1).

7. Method according to Claim 6, **characterized in that** the cost function is additionally formed on the basis of a desired firing signal.

8. Method according to Claim 5, **characterized in that** the cost function is formed on the basis of the difference between a desired firing signal and a firing signal (CRASH_LEARN) which is formed on the basis of the feature signal (v0S1).

9. Method according to Claim 8, **characterized in that** the difference is weighted on the basis of time.

10. Method according to Claim 4, **characterized in that** at least one respective feature signal (v0S1) is generated for each feature generator (31.0) from the set of feature generators (31.0, 31.1...31.m), a firing signal (CRASH_LEARN) being formed from the feature signals (v0S1, v1S1...vmS1), and a cost function being formed on the basis of the firing signal (CRASH_LEARN).

11. Method according to Claim 10, **characterized in that** the cost function is formed on the basis of a difference between a desired firing signal and the firing signal (CRASH_LEARN) which is dependent on the feature signals (v0S1, v1S1...vmS1).

12. Method according to Claim 11, **characterized in that** the difference is weighted on the basis of time.

13. Method according to one of Claims 3 to 12, **characterized in that** the automatically selected feature generator (31.0) is implemented in the collision and/or passenger protection system.

14. Method for producing a motor vehicle (1) having a collision and/or passenger protection system, **characterized in that** a method according to one of Claims 3 to 12 is implemented in the motor vehicle.

15. Method according to Claim 14, **characterized in that** a collision sensor (S1) for measuring a variable (aS1) of the motor vehicle (1), which variable is suitable for detecting a collision, is implemented in the motor vehicle (1) and is connected to the feature generator (31.0) for data transmission purposes in such a manner that the feature generator (31.0) can be used to generate a feature signal (v0S1) on the basis of the variable (aS1) measured using the collision sensor (S1).

16. Method according to Claim 15, **characterized in that** a passenger protection actuator (15, 16) which can be controlled using a firing signal (CRASH, AIR, BELT) which can be generated on the basis of the feature signal is implemented in the motor vehicle.

**Revendications**

1. Système de protection de personnes et/ou contre les collisions pour un véhicule automobile (1), comprenant au moins un détecteur de collision (S1) pour mesurer une grandeur (aS1) du véhicule automobile (1) appropriée pour une détection de collision, le système de protection de personnes et/ou contre les collisions comprenant un actionneur de protection de personnes (15, 16) pouvant être commandé au moyen d'un signal d'allumage (CRASH, AIR, GURT), ou un dispositif d'avertissement pouvant être commandé au moyen du signal d'allumage et un appareil de commande (2) pour déterminer le signal d'allumage (CRASH, AIR, GURT) en fonction d'un signal de caractéristique (v0S1) formé à partir de la grandeur (aS1) mesurée au moyen du détecteur de collision (S1), **caractérisé en ce que** le système de protection de personnes et/ou contre les collisions comprend un générateur de caractéristique (31.0) sélectionné automatiquement pour former le signal de caractéristique (v0S1) en fonction de la grandeur (aS1) mesurée au moyen du détecteur de collision (S1).

2. Système de protection de personnes et/ou contre les collisions selon la revendication 1, **caractérisé en ce que** la grandeur (aS1) mesurée au moyen du détecteur de collision (S1) est une grandeur de déplacement.

3. Procédé de fabrication d'un système de protection de personnes et/ou contre les collisions pour un véhicule automobile (1) selon l'une quelconque des revendications précédentes, comprenant au moins un détecteur de collision (S1) pour mesurer une grandeur (aS1) du véhicule automobile (1) appropriée pour une détection de collision, le système actif de protection de personnes et/ou contre les collisions comprenant un actionneur de protection de personnes (15, 16) pouvant être commandé au moyen d'un signal d'allumage (CRASH, AIR, GURT) et un appareil de commande (2) pour déterminer le signal d'allumage (CRASH, AIR, GURT) en fonction d'un signal de caractéristique (v0S1) formé à partir de la grandeur (aS1) mesurée au moyen du détecteur de collision (S1), **caractérisé en ce qu'**un générateur de caractéristique (31.0), prévu pour la mise en oeuvre dans le système de protection de personnes et/ou contre les collisions, est sélectionné automatiquement pour former le signal de caractéristique (v0S1).

4. Procédé selon la revendication 3, **caractérisé en ce que** le générateur de caractéristique (31.0) pour former le signal de caractéristique (v0S1), prévu pour la mise en oeuvre dans le système de protection de personnes et/ou contre les collisions, est sélectionné automatiquement à partir d'une pluralité de générateurs de caractéristique (31.0, 31.1... 31.m) pour former au moins chacun un signal de caractéristique (v0S1, v1S1 ... vmS1).

5. Procédé selon la revendication 3 ou 4, **caractérisé en ce que** la sélection du générateur de caractéristique (31.0) s'effectue en fonction d'une fonction de coût.

6. Procédé selon la revendication 5, **caractérisé en ce que** la fonction de coût est formée en fonction d'un signal d'allumage (CRASH_LEARN), qui est formé en fonction du signal de caractéristique (v0S1).

7. Procédé selon la revendication 6, **caractérisé en ce que** la fonction de coût est en outre formée en fonction d'un signal d'allumage souhaité.

8. Procédé selon la revendication 5, **caractérisé en ce que** la fonction de coût est formée en fonction de la différence entre un signal d'allumage souhaité et un signal d'allumage (CRASH_LEARN), qui est formé en fonction du signal de caractéristique (v0S1).

9. Procédé selon la revendication 8, **caractérisé en ce que** la différence est pondérée en fonction du temps.

10. Procédé selon la revendication 4, **caractérisé en ce que** pour chaque générateur de caractéristique (31.0) parmi la pluralité de générateurs de caractéristique (31.0, 31.1 ... 31.m), au moins chacun produit un signal de caractéristique (v0S1), un signal d'allumage (CRASH_LEARN) étant formé à partir des signaux de caractéristique (v0S1, v1S1 ... vmS1), et une fonction de coût étant formée en fonction du signal d'allumage (CRASH_LEARN).

11. Procédé selon la revendication 10, **caractérisé en ce que** la fonction de coût est formée en fonction d'une différence entre un signal d'allumage souhaité et le signal d'allumage (CRASH_LEARN) dépendant des signaux de caractéristique (v0S1, v1S1 ... vmS1).

12. Procédé selon la revendication 11, **caractérisé en ce que** la différence est pondérée en fonction du temps.

13. Procédé selon l'une quelconque des revendications 3 à 12, **caractérisé en ce que** le générateur de caractéristique (31.0) sélectionné automatiquement est mis en oeuvre dans le système de protection de personnes et/ou contre les collisions.

14. Procédé de fabrication d'un véhicule automobile (1) comprenant un système de protection de personnes et/ou contre les collisions, **caractérisé en ce qu'**un procédé selon l'une quelconque des revendications 3 à 12 est mis en oeuvre dans le véhicule automobile.

**15.** Procédé selon la revendication 14, **caractérisé en ce qu'**un détecteur de collision (S1) pour mesurer une grandeur (aS1) du véhicule automobile (1) appropriée pour une détection de collision est mis en oeuvre dans le véhicule automobile (1) et est associé par une technique de données au générateur de caractéristique (31.0) de telle sorte qu'un signal de caractéristique (v0S1) puisse être produit au moyen du générateur de caractéristique (31.0) en fonction de la grandeur (aS1) mesurée au moyen du détecteur de collision (S1).

**16.** Procédé selon la revendication 15, **caractérisé en ce qu'**un actionneur de protection de personnes (15, 16), pouvant être commandé au moyen d'un signal d'allumage (CRASH, AIR, GURT) pouvant être produit en fonction du signal de caractéristique, est mis en oeuvre dans le véhicule automobile.

Fig. 1

Fig. 2

10

aS3 →

aS2 → 20 CRASH → AIR →

aS3 →

MGURT → 21

MSITZ → GURT →

EINAUS →

Fig. 3

Fig. 4

Fig. 5

Fig. 6

Fig.7

Fig. 8

Fig. 9

Fig. 10

as1

as2

as3

31L

32L

33L

30L

v0S1

v1S1

vmS1

v0S2

v1S2

vmS2

v0S3

v1S3

vmS3

CRASH_LEARN

Fig. 11

Fig. 12

Fig. 13

```
┌─────────────┐
│     120     │
└─────────────┘
       │
       ▼
┌─────────────┐
│     121     │
└─────────────┘
       │
       ▼
┌─────────────┐
│     122     │
└─────────────┘
```

Fig. 14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2005037611 A1
- WO 2005037609 A1
- WO 2005035320 A2
- WO 2005035319 A1
- WO 2005037610 A1
- DE 102004032732
- DE 102004031010
- DE 102004025566
- DE 102004027693 A1
- DE 102004026638 A1
- DE 10243514 A1
- DE 10132681 C1
- DE 10117219 A1
- DE 10065518 B4
- DE 10059426 A1
- DE 10042376 C1
- DE 19909538 A1
- DE 10035505 A1